# EUROPEAN PATENT SPECIFICATION

(11) **EP 1 678 262 B1**
(45) Date of publication and mention of the grant of the patent: **22.10.2008**
(21) Application number: 04768692.8
(22) Date of filing: 29.09.2004
(51) Int. Cl.: C09D 11/00, C09D 11/02, B41M 5/30

(54) **IMPROVEMENTS IN THERMAL INK**
VERBESSERUNGEN BEI THERMOTINTE
ENCRE THERMIQUE AMELIOREE

(30) Priority: 30.09.2003 GB 0322907
(43) Date of publication of application: 12.07.2006
(73) Proprietor: ARJO WIGGINS LIMITED, Basingstoke, Hants RG24 8BA (GB)
(72) Inventor: WARD-ASKEY, Andrew, Berks SL3 7ES (GB); COOPER, John, Brian The House at Pooh Corner, Nr Winchester Hants SO21 2NN (GB); HOBSON, Michael, Eric 5 Bell Crescent, Bucks HP27 9SE (GB)
(74) Representative: Scott, Susan Margaret
(86) International application number: PCT/GB2004/004149
(87) International publication number: WO 2005/033220

(56) References cited:
- EP-A- 0 846 569
- EP-A- 1 092 551
- WO-A-02/064376

## Description

The present invention relates to thermal ink in which colour is developed by the direct application of heat.

In the manufacture of conventional thermal paper, a substrate such as paper is coated over its entire surface with an aqueous dispersion comprising colour formers, colour developers and sensitizers which are initially colourless but which become coloured on exposure to heat. Such dispersions can often contain a wax, for example a stearamide wax. When such a paper is passed under the print head of a thermal printer, the areas which are activated by the heated print elements of the printer form coloured images on the surface of the paper. Such papers work well and produce clear images, but are associated with a number of problems. The high chemical loading has been associated with environmental problems. The application of the thermal coating to the paper is an expensive operation, which must be carried out using complex and expensive coating equipment. And crucially, conventional printing to thermal coating is difficult, and can only be carried out by performing an expensive surface treatment to achieve compatibility between ink and coating or by specific printing processes e.g. UV cured inks.

Attempts have been made to develop a thermal ink which reduces the problems associated with thermal papers by obviating the need to provide a thermal coating over the whole surface of the paper. US 5,888,283 describes a thermal ink which can be printed onto paper using conventional printing processes, thus eliminating the need to use coating equipment. The ink is pigment free, and comprises an aqueous dispersion of an initially colourless colour former and an initially colourless colour developer which combine to form colour upon the application of heat, the ink having a solids content of at least 40% by weight. It preferably includes a sensitizer which at least partially surrounds the particles of colour developer. Suitable sensitizers include diphenoxyethane, aryl or alkyl-substituted biphenyls such as p-benzyl biphenyl, or toluidide phenyl hydroxynaphthoates and aromatic diesters such as dimethyl or dibenzyl terephthalate and dibenzyl oxalate. These materials may be used alone, or they may be combined with waxes or fatty acids. The ink is applied by a flexographic or gravure printing process, and develops colour when passed through a direct thermal printer.

The development described above has, however, a number of disadvantages. Specifically, using standard "stock" substrates under standard thermal imaging equipment leads to poor image formation. High energy laser sources are needed to produce acceptable image intensity. EP 600 441A describes a method which comprises irradiating a printed surface with a laser, the surface being printed with an ink which comprises a leuco dye as a colour former, an acidic substance as a colour developer, and at least one background colour formation inhibitor which is a water-soluble amino acid, and ammonium salt of an inorganic acid, a pH buffer, or water. However, laser printer types are not standard within the thermal paper industry and require cost expenditure to replace traditional thermal printing equipment if they are to be used.

There is therefore a need for a system in which a thermal ink can be used to provide good print quality using standard thermal imaging equipment, there is minimal discolouration during storage, and the product can be readily and economically printed using conventional non thermal imaging processes before it is thermally printed.

We have developed a thermal printing ink which, when printed on a very specific substrate, is resistant to premature colouration during storage of the coated papers, and may be imaged to produce high quality prints using standard thermal writing equipment at standard energy levels. The ink can be applied by printing on specific areas of a sheet. This reduces chemical costs and also allows the non-coated areas on the sheet to be printed by conventional means (wet offset and the like) to add value to the sheet, which is generally not possible using conventional thermal papers. The printing of the thermal ink can be carried out at the same time as the printing of information using conventional ink, which means that, for the first time, it is possible to produce visually attractive products such as labels, tickets or till rolls which carry high quality conventionally printed information, which will develop a high quality thermal image when subsequently passed through a thermal printer. The substrate used to carry the printed material may be made on a conventional paper making machine and, unlike conventional thermal coated papers, does not require subsequent processing using a separate coating machine.

Accordingly the present invention provides a thermal ink which comprises a colour former, a colour developer and a sensitizer, characterised in that the colour former comprises 3-dibutylamino-6-methyl-7-anilinofluoran; the colour developer comprises bisphenol A; and the sensitizer comprises dimethyl terephthalate; and that the ink also comprises at least one pigment.

The colour former used in the present invention is 3-dibutylamino-6-methyl-7-anilinofluoran, alternative nomenclature: spiro[isobenzofuran-1(3H),9'-[9H]xanthen]-3-one,-6'-(dibutylamino)-3'-methyl-2'-(phenylamino)-, known by the common name ODB2, CAS number 89331-94-2, and available under the Trade Marks Black I-2R (Ciba), Black T-2R (Ciba), and PSD 184 (Nisso) amongst others.

Preferably the ink according to the invention contains only 3-dibutylamino-6-methyl-7-anilinofluoran as the colour former. However, if desired, one or more additional colour formers may be added provided that such colour former does not lead to excessive discolouration. To prevent excessive discolouration, such additional colour former is preferably present in an amount of less than 10%, preferably less than 5%, especially less than 1%, by wt based on total colour former. The 3-dibutylamino-6-methyl-7-anilinofluoran may contain those impurities normally introduced under manufacturing conditions; these should preferably not exceed 1%wt.

Preferably the ink according to the invention contains only bisphenol A as the colour developer. However, if desired, one or more additional colour developers may be added provided that such colour developer does not lead to excessive discolouration. To prevent excessive discolouration, such additional colour developer is preferably present in an amount of less than 10%, especially less than 5%, preferably less than 1%, by wt based on total colour developer. The bisphenol A may contain those impurities normally introduced under manufacturing conditions; these should preferably not exceed 1%wt.

Preferably DMT is the only sensitizer present, although one or more additional sensitizers may be present if desired. To prevent excessive discolouration, such additional sensitizer is preferably present in an amount of less than 10%, preferably less than 5% by wt based on total sensitizer. The DMT may contain those impurities normally introduced under manufacturing conditions; these should preferably not exceed 1%wt.

The pigment comprised in the thermal ink according to the invention is preferably a high surface area, absorptive pigment, for example precipitated calcium carbonate, silica or calcined clay. Surprisingly, the presence of a pigment does not render the ink unsuitable for use in the intended application; rather, the pigment helps to prevent migration of the ink onto the thermal printing head during imaging, giving a high quality image.

Preferably the thermal ink of the present invention is free from wax. In conventional thermal formulations, paraffin wax is used to reduce unwanted discolouration of the thermal paper during storage. It is a surprising feature of the present invention that discolouration can be reduced without the presence of wax in the formulation.

The ink suitably consists of three individual components mixed to form the ink precursor:
1) A dye system which includes the colour former and DMT, and which may also include components such as, for example, one or more surfactants, preferably a polyvinyl alcohol surfactant and optionally additional surfactants, and antifoam agents.
2) A coreactant system which includes the colour developer and DMT, and which may also include components such as, for example, one or more surfactants, preferably a polyvinyl alcohol surfactant and optionally additional surfactants, and antifoam agents.
3) A pigment dispersion in slurry form.

The thermal ink of the present invention is suitably prepared by grinding the above three components separately. These separate grinding operations reduce the tendency for unwanted colour reaction and produce a non-coloured ink vehicle. Preferably the particles in each component are ground to a particle size of less than 1.5µ, especially less than 1.0µ, for example from 0.25µ to 1.0µ. The components are then mixed together, optionally including additional components such as slip agents and defoamers, to form the resulting ink, which may be printed using conventional means, being compatible with standard flexographic printing processes in terms of viscosity and cell transfer. Ink in which the solid particles have a particle size of less than 1.5µ produces especially advantageous results.

Other additives which may be present if desired include zinc stearate which can be added as a slip agent to prevent build up on the thermal printing head, depending on the thermal printer design.

The thermal ink according to the invention has particularly useful properties when used in combination with a particular substrate. In this substrate, a sheet, which may for example be synthetic paper or polymer film but which is preferably paper, is coated on at least one surface with a coating comprising a layer containing a pigment in solid porous particulate form. The pigment present in the coating has a high surface area and a high absorptivity, preferably with a surface area measured at >100 m²/g using the BET method or an ink absorbency of >50g oil/100g pigment (as described in Kirk-Othmer Encyclopedia of Chemical Technology, 3rd Edition, Volume 17, pages 796 - 808). It preferably comprises calcined clay, calcium carbonate (in precipitated form, which is porous and of high absorptivity), and/or silica. The coating also preferably comprises at least one additional pigment, preferably a plastic pigment in the form of hollow spheres.

The thermally printable sheet described above may be developed using conventional thermal printers. In such printers, heat is generated by the application of short pulses of low-power electrical energy. There is no requirement to use specialist equipment such as lasers.

The thermally printable sheet may be prepared by printing a thermal ink according to the invention onto the coated surface of the substrate, using a printer. It is a major advantage provided by the invention that the coating applied to the substrate may be applied to the whole surface of a sheet of paper during a conventional paper-making process without the use of separate, expensive coating machines, while the thermal ink can be printed onto only those parts of the coated surface where thermal activity is required, using a conventional printer, if desired at the same time as conventional ink is printed onto the surface to provide high-quality visible information.

The specific coating present on the substrate provides a number of advantages when used in combination with the thermal ink according to the invention. The thermal ink is held near the surface of the sheet to permit good contact with the thermal printing head and maximise print formation, and there is adequate absorption of the thermal ink to prevent unwanted contamination of the thermal printing head which impairs print quality. In addition, thermal insulation is provided such that energy applied to the surface is maximised within a localised area rather than being dissipated through the sheet. This maximises the thermal print formation.

Most surprisingly, the use of the thermal ink according to the invention in combination with a substrate bearing a coating comprising a layer containing a pigment in solid porous particulate form, leads to a significant reduction in discolouration during storage compared with conventional thermal papers.

The following Examples illustrate the invention.

### Example 1

### Dye Material

Under agitation of <100 rpm using a Greaves or Silverson mixer, 2.25 dry parts of a 20% Polyvinyl alcohol solution (Moviol 4/88 - Clariant or Poval 203 - Kurraray) was added to a pre-selected quantity of water to achieve 40% total solids of the dye material blend. 0.08 dry parts of Surfinol 420 (Air Products) were quickly added to reduce foaming. Agitation was increased to 200 rpm and 4.56 dry parts of colour former, such as Pergascript T2R (Ciba Specialty Chemicals) were added, and mixing continued until the colour former was fully dispersed. 2.58 dry parts of DMT sensitiser (Molekula Ltd., UK) were then added to the mixture under agitation of <100 rpm. Lastly a very small amount of Drewplus S4386 defoamer (Drew) was added.
The resulting fully dispersed mixture was added to a bead mill and continued to be ground until a size of less than 1µm median size and preferably ± 0.5µm median size was achieved, as measured using a Malvern Multisizer. Particular attention was taken to ensure that the temperature during the grinding process did not rise to above 30°C. This prevented unwanted gellation of the mixture.

### Co-reactant Material

Under agitation of <100 rpm using a Greaves or Silverson mixer, 2.25 dry parts of a 20% Polyvinyl alcohol solution (Moviol 4/88 - Clariant or Poval 203 - Kurraray) was added to a pre-selected quantity of water to achieve 40% total solids of the co-reactant material blend. 0.08 dry parts of Surfinol 420 (Air Products) were quickly added to reduce foaming. Agitation was increased to 200 rpm and 10 dry parts of Bisphenol A coreactant (Molekula Ltd., UK) were added. Mixing continued until the colour former was fully dispersed. 2.58 dry parts of DMT sensitiser (Molekula Ltd., UK) were then added to the mixture under agitation of <100 rpm. Lastly a very small amount of Drewplus S4386 defoamer (Drew) was added.
The resulting fully dispersed mixture was added to a bead mill and continued to be ground until a size of less than 1µm median size and preferably ± 0.6µm median size was achieved, as measured using a Malvern Multisizer. Particular attention was taken to ensure that the temperature during the grinding process did not rise to above 30°C. This prevented unwanted gellation of the mixture.

### Pigment Material

Commercial high surface area pigment such as precipitated calcium carbonate (Calopake - F, SMI) was added to a pre-selected quantity of water to achieve a final solids of 55%. The mixture was agitated using a Greaves or Silverson mixer such that a particle size of less than 1.5µm median size was achieved.

### Ink Mixture

In a large stirred beaker or similar vessel, a pre-selected quantity of water to achieve a final ink solids of 46% was added followed by the co-reactant material mixture. 5.7% dry parts of a 30% solution of Hidorin Z-7-30 (Chukyo Europe) was added to the stirred co-reactant mixture.
The pigment material blend was next added to the stirred vessel and lastly the dye material was added.

The composition of the resultant ink is shown in the following Table 1.

**Table 1**

| Material | % by weight |
|---|---|
| Polyvinyl alcohol - Moviol 4/88 | 4.5 |
| Bisphenol A | 10 |
| Black T2R | 4.56 |
| Dimethyl terephthalate | 5.7 |
| Calopake-F | 20 |
| Zinc stearate - Hidorin Z-7-30 (30%E.E) | 5.7 |
| Surfinol 420 | 0.3 |
| Drew N40 (defoamer) | 0.1 |
| Total | 100 |

### Print Quality

The ink was applied by a laboratory flexographic printing unit at a coatweight range of up to 4gsm. Using a conventional thermal fax printer, at a pulse signal range of 1.0 - 1.4msec images were produced, and the results are given in Table 2. For comparison, the experiment was repeated using an uncoated base paper. Higher numbers obtained using a Gretag reader indicate a higher visibility printed image.

**Table 2**

| | Gretag Measurement | |
|---|---|---|
| | 1.2msec | 1.4msec |
| Uncoated base paper | 0.06 | 0.04 |
| Precoated base paper | 0.31 | 0.72 |

It can be seen that the print quality is significantly better using the coated paper than using the uncoated paper. In both cases, minimal transfer of ink to the thermal printer head was observed.

### Example 2

### Storage Stability

Ink samples prepared as in Example 1 were stored in standard warehousing conditions (i.e. neither in excessive direct light nor in extremes of temperature) for a 12 month period. Ink colour did not deteriorate during this storage period.

The ink was printed and tested using the methodology of Example 1. Results of a very similar order of magnitude were obtained indicating a very good storage potential of the ink.

Ink printed paper samples produced as in Example 1 were dark stored in a laboratory cupboard for a 12 month period. The ink printed paper samples remained white in appearance. Imaged samples using the method described in Example 1 and measured using the Gretag densitometer gave exactly the same results as when the paper was freshly printed with ink. This indicated very good stability of the printed paper samples.

## Claims

1. A thermal ink which comprises a colour former, a colour developer and a sensitizer, **characterised in that** the colour former comprises 3-dibutylamino-6-methyl-7-anilinofluoran; the colour developer comprises bisphenol A; and the sensitizer comprises dimethyl terephthalate; and that the ink also comprises at least one pigment.

2. A thermal ink according to claim 1, in which 3-dibutylamino-6-methyl-7-anilinofluoran is the only colour former present, and bisphenol A is the only colour developer present.

3. A thermal ink according to either claim 1 or claim 2, which is free of wax.

4. A thermal ink according to any one of claims 1 to 3, in which the pigment is calcined clay, precipitated calcium carbonate, and/or silica.

5. A thermal ink according to any one of claims 1 to 4, in which the particle size of solids present in the ink is less than 1.5µ.

6. A thermal ink according to claim 5, in which the particle size of solids present in the ink is less than 10µ.

7. A thermal ink according to any one of claims 1 to 6, which also comprises polyvinyl alcohol.

8. A method of preparing a thermal ink according to any one of claims 1 to 7, which comprises grinding together the colour former and DMT; in a separate operation, grinding together the colour developer and DMT; and subsequently blending together said ground products together with a pigment.

9. The use of a combination of 3-dibutylamino-6-methyl-7-anilinofluoran and bisphenol A in a thermal ink also comprising DMT as sensitizer and also comprising a pigment, to reduce unwanted discolouration during storage of a thermally printable sheet product comprising a base sheet having at least one surface coated with a layer containing a pigment in solid porous particulate form, said thermal ink being printed upon said coated surface.

10. The use of a combination of a thermal ink comprising 3-dibutylamino-6-methyl-7-anilinofluoran as colour former, bisphenol A as colour developer, DMT as sensitizer, and a pigment, and a surface coating comprising a pigment in solid porous particulate form, to reduce unwanted discolouration during storage of a thermally printable sheet product.

## Patentansprüche

1. Thermische Tinte die einen Farbbildner, einen Farbentwickler und einen Sensibilisator umfasst, **dadurch gekennzeichnet, dass** der Farbbildner 3-Dibutylamino-6-methyl-7-anilinfluoran umfasst; der Farbentwickler Bisphenol A umfasst und der Sensibilisator Dimethylterephthalat umfasst, und dass die Tinte ebenfalls zumindest ein Pigment umfasst.

2. Thermische Tinte gemäß Anspruch 1, wobei 3-Dibutylamino-6-methyl-7-anilinfluoran der einzige anwesende Farbbildner ist, und Bisphenol A der einzig anwesende Farbentwickler ist.

3. Thermische Tinte gemäß Anspruch 1 oder 2, die frei von Wachs ist.

4. Thermische Tinte nach einem der Ansprüche 1 bis 3, wobei das Pigment kalzinierter Ton, präzipitiertes Kalziumcarbonat und/oder Silika ist.

5. Thermische Tinte gemäß einem der Ansprüche 1 bis 4, wobei die Partikelgröße der in der Tinte vorhandenen Feststoffe geringer als 1,5 µ ist.

6. Thermische Tinte gemäß Anspruch 5, wobei die Partikelgröße der in der Tinte vorhandenen Feststoffe geringer als 10 µ ist.

7. Thermische Tinte gemäß einem der Ansprüche 1 bis 6, die ebenfalls einen Polyvinylalkohol umfasst.

8. Verfahren zur Herstellung einer thermischen Tinte gemäß einem der Ansprüche 1 bis 7, umfassend das gemeinsame Vermahlen des Farbbildners und des DMT; in einem gesonderten Arbeitsfortgang das gemeinsame Vermahlen des Farbentwicklers und des DMT; und daran anschließendes Zusammenmischen der gemahlenen Produkte gemeinsam mit einem Pigment.

9. Die Verwendung einer Kombination von 3-Dibutylamino-6-methyl-7-anilinfluoran und Bisphenol A in einer thermischen Tinte, die ebenfalls DMT als Sensibilisator und ebenfalls ein Pigment umfasst, um unerwünschte Verfärbung während der Lagerung einer thermisch bedruckbaren Blattware zu vermindern, die ein Rohblatt, welches zumindest eine Oberfläche aufweist, die mit einer Schicht beschichtet ist, welche ein Pigment in fester poröser partikulärer Form aufweist, umfasst, wobei die thermische Tinte auf diese beschichtete Oberfläche aufgedruckt ist.

10. Die Verwendung einer Kombination aus einer thermischen Tinte umfassend 3-Dibutylamino-6-methyl-7-anilinfluoran als Farbbildner, Bisphenol A als Farbentwickler, DMT als Sensibilisator, und ein Pigment, und einer Oberflächenbeschichtung umfassend ein Pigment in fester poröser partikulärer Form, um unerwünschte Verfärbung während der Lagerung einer thermisch bedruckbaren Blattware zu vermindern.

## Revendications

1. Encre thermique qui comprend un chromogène, un révélateur chromogène et un sensibilisateur, **caractérisée en ce que** le chromogène comprend du 3-dibutylamino-6-méthyl-7-anilinofluorane ; le révélateur chromogène comprend du bisphénol A ; et le sensibilisateur comprend du téréphtalate de diméthyle ; et **en ce que** l'encre comprend aussi au moins un pigment.

2. Encre thermique selon la revendication 1, dans laquelle le 3-dibutylamino-6-méthyl-7-anilinofluorane est le seul chromogène présent, et le bisphénol A est le seul révélateur chromogène présent.

3. Encre thermique selon l'une ou l'autre de la revendication 1 et de la revendication 2, qui est exempte de cire.

4. Encre thermique selon l'une quelconque des revendications 1 à 3, dans laquelle le pigment est une argile calcinée, du carbonate de calcium précipité, et/ou de la silice.

5. Encre thermique selon l'une quelconque des revendications 1 à 4, dans laquelle la granulométrie de l'extrait sec présent dans l'encre est inférieure à 1,5 µ.

6. Encre thermique selon la revendication 5, dans laquelle la granulométrie de l'extrait sec présent dans l'encre est inférieure à 10 µ.

7. Encre thermique selon l'une quelconque des revendications 1 à 6, qui comprend aussi du poly(alcool vinylique).

8. Procédé pour préparer une encre thermique selon l'une quelconque des revendications 1 à 7, qui comprend le broyage ensemble du chromogène et du DMT ; dans une opération séparée, le broyage ensemble du révélateur chromogène et du DMT ; et ensuite le mélange ensemble desdits produits broyés conjointement avec un pigment.

9. Utilisation d'une combinaison de 3-dibutylamino-6-méthyl-7-anilinofluorane et de bisphénol A dans une encre thermique comprenant aussi du DMT en tant que sensibilisateur et comprenant aussi un pigment, pour réduire une décoloration non souhaitée durant le stockage d'un produit en feuille thermiquement imprimable comprenant une feuille de base ayant au moins une surface revêtue d'une couche contenant un pigment sous forme particulaire poreuse solide, ladite encre thermique étant imprimée sur ladite surface revêtue.

10. Utilisation d'une combinaison d'une encre thermique comprenant du 3-dibutylamino-6-méthyl-7-anilinofluorane en tant que chromogène, du bisphénol A en tant que révélateur chromogène, du DMT en tant que sensibilisateur, et un pigment, et d'un revêtement de surface comprenant un pigment sous forme particulaire poreuse solide, pour réduire une décoloration non souhaitée durant le stockage d'un produit en feuille thermiquement imprimable.
